# EUROPÄISCHE PATENTSCHRIFT

(11) **EP 1 833 706 B1**
(45) Veröffentlichungstag und Bekanntmachung des Hinweises auf die Patenterteilung: **06.03.2013**
(21) Anmeldenummer: 05815752.0
(22) Anmeldetag: 10.11.2005
(51) Int. Cl.: B60S 1/24, B60S 1/34

(54) **SCHEIBENWISCHVORRICHTUNG**
WINDSCREEN WIPER
DISPOSITIF D'ESSUIE-GLACE

(30) Priorität: 29.12.2004 DE 102004063175
(43) Veröffentlichungstag der Anmeldung: 19.09.2007
(73) Patentinhaber: ROBERT BOSCH GMBH, 70442 Stuttgart (DE)
(72) Erfinder: RAPP, Juergen, 77886 Lauf (DE)
(86) Internationale Anmeldenummer: PCT/EP2005/055875
(87) Internationale Veröffentlichungsnummer: WO 2006/072497

(56) Entgegenhaltungen:
- EP-A- 1 295 767
- DE-A1- 19 647 023
- DE-U- 1 841 670
- US-A- 4 695 180

## Beschreibung

Die Erfindung betrifft eine Scheibenwischvorrichtung, insbesondere für ein Kraftfahrzeug, mit einem Befestigungsteil und einem damit verbundenen Lenkerhebel gemäß dem Oberbegriff des Anspruches 1.

Scheibenwischvorrichtungen dieser Art mit einer Kugelgelenkverbindung zwischen Lenkerhebel und Befestigungsteil sind aus der US-A-4695180 in einer den Kippwinkel der Kugelgelenkverbindung begrenzenden Ausgestaltung bekannt, und zwar mit einem kugelförmig ausgebildeten Zapfen, der von einer Kugelschale aufgenommen ist. Zur Begrenzung des Kippwinkels ist der kugelförmig ausgebildete Zapfen mit einem in Richtung zu einer Mittelachse sich erstreckenden Fortsatz ver- sehen, der in eine zum Innenumfang der Kugelschale hinterschnittene Vertiefung eingreift, die zum Fortsatz ein radiales, die Größe des Kippwinkels bestimmtes Übermaß aufweist. Der Freiraum zwischen Fortsatz und Vertiefung dient als Aufnahmeraum für Schmiermittel und der Fortsatz ist mit stirnseitig kreuzförmig durchschneidenden Schmiernuten versehen.

Bei einer ähnlichen, aus der DE-A-19747023 bekannten Konstruktion ist zum Schutz der Kugelgelenkverbindung gegen Verschmutzung der Übergangsraum zwischen dem vom Lenkerhebel getragenen kugelförmig ausgebildeten Zapfen und dem mit der Kugelschale verbundenen Befestigungsteil durch ein zwischen diesen sich erstreckendes und umfangsseitig den offenen Endbereich der Kugelschale und den Fußteil des Zapfens umschließendes, in sich elastisches und verspanntes schalenförmiges Dichtelement umschlossen.

Aus der DE-1841670U ist eine Kugelgelenkverbindung zwischen Gestängeteilen insbesondere von Scheibenwischvorrichtungen bekannt, bei der die durch einen kugelförmig ausgebildeten Zapfen gebildete Gelenkkugel von einer ringförmigen und einer axial offenen Kugelschale umgriffen ist, die auf dem Kugelzapfen axial durch einen radial einspringenden Randbereich festgelegt ist, der in einen rinnenförmigen Bereich eines zur Kugel auskragenden Fortsatzes eingreift.

Schließlich ist aus der EP-A-1295767 eine Scheibenwischvorrichtung mit einem Viergelenk-Wischerarm bekannt, dessen Befestigungsteil für den Wischerarm mit zwei Lenkerhebeln über Lagerstellen verbunden ist, von denen die eine durch ein Radiallager und die andere durch ein Kugelgelenk mit am Lenkerhebel fixierten Kugelzapfen gebildet ist, auf dessen Kugel beabstandet zum Lenkerhebel die am Befestigungsteil vorgesehene Kugelschale sitzt, so dass über das Radiallager die Ausrichtung des Befestigungsteiles zum einen Lenkerhebel festgelegt ist und über die Kugelgelenkverbindung eine spannungsfreie Abstützung des Befestigungsteils zum anderen Lenkerteil geschaffen ist.

Bezogen auf solche Kugelgelenkverbindungen in Scheibenwischvorrichtungen, die nur einen geringen Montageaufwand bedingen, die kostengünstig herzustellen sind und die durch die Ausbildung des kugelförmigen Zapfens mit einem bolzenförmigen Fortsatz eine definierte Verschwenkebene zwischen Befestigungsteil und Lenkerhebel festlegen, liegt der Erfindung die Aufgabe zugrunde, ohne zusätzlichen konstruktiven Aufwand eine stabile Führung in dieser Schwenkebene zu gewährleisten.

Gemäß der Erfindung wird dies mit den Merkmalen des Anspruches 1 erreicht, wobei dadurch, dass der Lenker und das Befestigungsteil aneinander anliegen, parallel zur Führung durch den Eingriff des am Zapfen vorgesehenen Fortsatzes in die Vertiefung der Kugelschale eine Abstützung auf die Schwenkebene erfolgt, somit eine zweifache Abstützung unter entsprechender Lastaufteilung erreicht ist.

Die Vertiefung kann auch durch eine Bohrung gebildet sein.

Damit sich der Zapfen und die Kugelschale nicht im Betrieb voneinander lösen können, kann der Zapfen in die Kugelschale einrasten. Der Einrastvorgang kann mit einem einzigen Handgriff ausgeführt werden.

Die Kugelschale kann in das Befestigungsteil oder in den Lenkerhebel preiswert in großen Stückzahlen eingespritzt werden. Somit kann die Montage der Kugelschale in das Befestigungsteil oder in den Lenkerhebel entfallen.

Die Kugelschale kann vorzugsweise aus Polyamid gefertigt sein.

In einer weiteren Ausführungsform kann das Befestigungsteil aus einem Kunststoff, insbesondere aus einem faserverstärkten Kunststoff, gefertigt sein. Dann kann die Kugelschale bei der Fertigung des Befestigungsteils schon in das Befestigungsteil integriert werden, sodass ein separates Einspritzen der Kugelschale entfallen kann.

Wenn der Zapfen durch eine Taumelnietung an dem Lenkerhebel oder an dem Befestigungsteil befestigt wird, kann dieser Befestigungsvorgang sehr gut automatisiert werden, wodurch ebenfalls Kosten gesenkt werden können.

Nachfolgend werden verschiedene Ausführungsbeispiele anhand der beiliegenden Zeichnungen näher erläutert.

Im Einzelnen zeigen:
- Fig. 1: eine Explosionsdarstellung einer Verbindung eines Befestigungsteils mit zwei Lenkerhebeln für einen Viergelenkwischarm;
- Fig. 2: eine Schnittansicht durch einen kugelförmigen Zapfen und eine erste Ausführungsform einer Kugelschale;
- Fig. 3: eine Schnittansicht durch den kugelförmigen Zapfen und eine zweite Ausführungsform der Kugelschale.

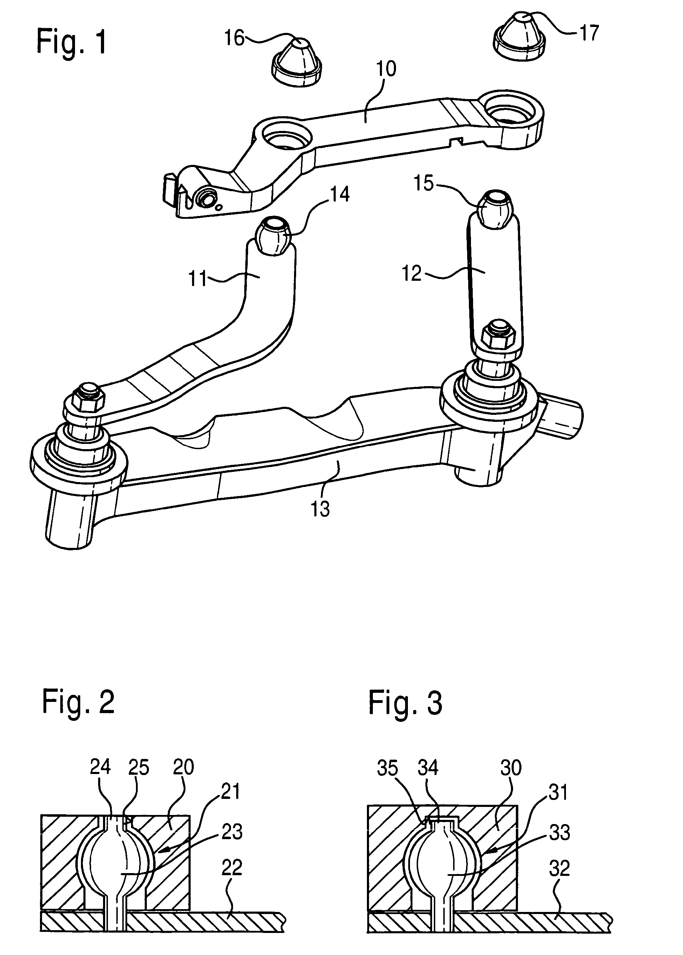

Fig. 1 zeigt eine Anordnung eines Befestigungsteils 10 und zweier Lenkerhebel 11 und 12 eines hier nicht näher dargestellten Viergelenkwischarms. Das Befestigungsteil 10 ist mit zwei Lenkerhebeln 11 und 12 verbindbar. Die Lenkerhebel 11 und 12 sind an einem Formrohr 13 angelenkt.

Auf den Lenkerhebeln 11 und 12 sind kugelförmig ausgebildete Zapfen 14 und 15 angeordnet. In das Befestigungsteil 10 sind zwei Kugelschalen 16 und 17 einspritzbar. Bei der Montage des Befestigungsteils 10 mit den Lenkerhebeln 11 und 12, werden die Kugelschalen 16 und 17 auf die kugelförmig ausgebildeten Zapfen 14 und 15 gedrückt, sodass die Zapfen 14 und 15 mit den Kugelschalen 16 und 17 verrassten.

Die Kugelschalen 16 und 17 können vorzugsweise aus Polyamid gefertigt sein.

Die Kugelzapfen 14 und 15 können vorzugsweise durch eine Taumelnietung an den Lenkerhebeln 11 und 12 befestigt sein.

Fig. 2 zeigt ein Befestigungsteil 20, das aus einem Kunststoff, vorzugsweise aus einem faserverstärkten Kunststoff, gefertigt ist. In das Befestigungsteil 20 ist eine Kugelschale 21 schon integriert, sodass die Kugelschale 21 nicht separat in das Befestigungsteil 20 montiert oder eingespritzt werden muss.

An einem Lenkerhebel 22 ist ein kugelförmiger Zapfen 23 angeordnet, der in die Kugelschale 21 eingerastet werden kann.

An dem Zapfen 23 befindet sich ein bolzenförmiger Fortsatz 24, der in eine in der Kugelschale 21 vorgesehene Bohrung 25 eingreift. Dadurch können das Befestigungsteil 20 und der Lenkerhebel 22 nur in einer einzigen definierten Verschwenkebene zueinander verschwenkt werden. Die Verschwenkebene liegt quer zur Axialrichtung des Zapfens 23.

Fig. 3 zeigt ein Befestigungsteil 30, in das eine Kugelschale 31 integriert ist.

An einem Lenkerhebel 32 ist ein kugelförmiger Zapfen 33 angeordnet, der in die Kugelschale 31 eingerastet werden kann.

Der Zapfen 33 weist einen bolzenförmigen Fortsatz 34 auf, mit dem er in eine zylindrische Vertiefung 35 eingreifen kann. Dies ist eine weitere konstruktive Möglichkeit, um das Befestigungsteil 30 und den Lenkerhebel 32 in einer einzigen definierten Verschwenkebene zueinander zu verschwenken.

Außerdem liegt das Befestigungsteil 20 und 30 auf dem Lenkerhebel 22 und 32 auf (siehe Fign. 2 und 3), wodurch das Befestigungsteil 20 und 30 zum Lenkerhebel 22 und 32 ebenfalls in einer einzigen bevorzugten Verschwenkebene verschwenkt werden kann.

## Patentansprüche

1. Scheibenwischvorrichtung, insbesondere für ein Kraftfahrzeug, mit einem Befestigungsteil (10, 20, 30) und einem damit verbundenen Lenkerhebel (11, 12, 22, 32), wobei der Lenkerhebel (11, 12, 22, 32) oder das Befestigungsteil (10, 20, 30) einen kugelförmig ausgebildeten Zapfen (14, 15, 23, 33) und das Befestigungsteil (10, 20, 30) oder der Lenkerhebel (11, 12, 22, 32) eine Kugelschale (16, 17, 21, 31) aufweist und wobei der kugelförmig ausgebildete Zapfen (23, 33) einen bolzenförmigen Fortsatz (24, 34) und die Kugelschale (31) eine zylindrische Vertiefung (34, 35) aufweist,
**dadurch gekennzeichnet, dass** der Lenkerhebel (22, 32) und das Befestigungsteil (20, 30) aneinander anliegen.

2. Scheibenwischvorrichtung nach Anspruch 1,
**dadurch gekennzeichnet, dass** die Kugelschale (21) eine Bohrung (25) aufweist.

3. Scheibenwischvorrichtung nach Anspruch oder 2,
**dadurch gekennzeichnet, dass** der kugelförmig ausgebildete Zapfen (14, 15, 23, 33) in die Kugelschale (16, 17, 21, 31) einrastbar ist.

4. Scheibenwischvorrichtung nach einem der Ansprüche 1 bis 3,
**dadurch gekennzeichnet, dass** die Kugelschale (16, 17) in das Befestigungsteil (10) oder in den Lenkerhebel eingespritzt ist.

5. Scheibenwischvorrichtung nach Anspruch 4,
**dadurch gekennzeichnet, dass** die Kugelschale (16, 17) aus Polyamid gefertigt ist.

6. Scheibenwischvorrichtung nach einem der Ansprüche 1 bis 5,
**dadurch gekennzeichnet, dass** das Befestigungsteil (10, 20, 30) aus Kunststoff gefertigt ist.

7. Scheibenwischvorrichtung nach einem der Ansprüche 1 bis 6,
**dadurch gekennzeichnet, dass** der Zapfen (14,15, 23, 33) durch eine Taumelnietung an dem Lenkerhebel (11, 12, 22, 32) oder an dem Befestigungsteil (10, 20, 30) befestigt ist.

## Claims

1. Windscreen wiper device, in particular for a motor vehicle, with a fastening part (10, 20, 30) and a pivot lever (11, 12, 22, 32) which is connected thereto, wherein the pivot lever (11, 12, 22, 32) or the fastening part (10, 20, 30) has a spherically designed journal (14, 15, 23, 33), and the fastening part (10, 20, 30) or the pivot lever (11, 12, 22, 32) has a ball socket (16, 17, 21, 31), and wherein the spherically designed journal (23, 33) has a bolt-shaped extension (24, 34) and the ball socket (31) has a cylindrical depression (34, 35),
**characterized in that** the pivot lever (22, 32) and the fastening part (20, 30) bear against each other.

2. Windscreen wiper device according to Claim 1, **characterized in that** the ball socket (21) has a bore (25).

3. Windscreen wiper device according to Claim 1 or 2, **characterized in that** the spherically designed journal (14, 15, 23, 33) is latchable in the ball socket (16, 17, 21, 31).

4. Windscreen wiper device according to one of Claims 1 to 3,
**characterized in that** the ball socket (16, 17) is injected into the fastening part (10) or into the pivot lever.

5. Windscreen wiper device according to Claim 4, **characterized in that** the ball socket (16, 17) is manufactured from polyamide.

6. Windscreen wiper device according to one of Claims 1 to 5, **characterized in that** the fastening part (10, 20, 30) is manufactured from plastic.

7. Windscreen wiper device according to one of Claims 1 to 6, **characterized in that** the journal (14, 15, 23, 33) is fastened to the pivot lever (11, 12, 22, 32) or to the fastening part (10, 20, 30) by wobble riveting.

## Revendications

1. Dispositif d'essuie-glace, notamment pour un véhicule automobile, avec une partie de fixation (10, 20, 30) et un levier de direction (11, 12, 22, 32) relié à lui, le levier de direction (11, 12, 22, 32) ou la partie de fixation (10, 20, 30) comportant un tenon (14, 15, 23, 33) en forme sphérique et la partie de fixation (10, 20, 30) ou le levier de direction (11, 12, 22, 32) comportant une coque sphérique (16, 17, 21, 31) et le tenon (23, 33) de forme sphérique comportant une saillie (24, 34) en forme de boulon et la coque sphérique (31) comportant un renfoncement cylindrique (34, 35), **caractérisé en ce que** le levier de direction (22, 32) et la partie de fixation (20, 30) reposent l'un contre l'autre.

2. Dispositif d'essuie-glace selon la revendication 1, **caractérisé en ce que** la coque sphérique (21) comporte un alésage (25).

3. Dispositif d'essuie-glace selon la revendication 1 ou 2, **caractérisé en ce que** le tenon (14, 15, 23, 33) réalisé en forme de sphère peut être encliqueté dans la coque sphérique (16, 17, 21, 31).

4. Dispositif d'essuie-glace selon l'une quelconque des revendications 1 à 3, **caractérisé en ce que** la coque sphérique (16, 17) est injectée dans la partie de fixation (10) ou dans le levier de direction.

5. Dispositif d'essuie-glace selon la revendication 4, **caractérisé en ce que** la coque sphérique (16, 17) est fabriquée en polyamide.

6. Dispositif d'essuie-glace selon l'une quelconque des revendications 1 à 5, **caractérisé en ce que** la partie de fixation (10, 20, 30) est fabriquée en matière plastique.

7. Dispositif d'essuie-glace selon l'une quelconque des revendications 1 à 6, **caractérisé en ce que** le tenon (14, 15, 23, 33) est fixé au levier de direction (11, 12, 22, 32) ou à la partie de fixation (10, 20, 30) par le biais d'un rivetage vacillant.
